(19) Europäisches Patentamt
European Patent Office
Office européen des brevets

(11) Veröffentlichungsnummer: **0 074 523**
**B1**

(12) # EUROPÄISCHE PATENTSCHRIFT

(45) Veröffentlichungstag der Patentschrift: **24.06.87**

(51) Int. Cl.⁴: **C 09 B 1/58**, C 09 K 19/52

(21) Anmeldenummer: **82107728.6**

(22) Anmeldetag: **24.08.82**

(54) **Flüssigkristallines Material enthaltend Anthrachinonfarbstoffe sowie neue Anthrachinonfarbstoffe.**

(30) Priorität: **05.09.81 DE 3135187**
**22.12.81 DE 3150822**

(43) Veröffentlichungstag der Anmeldung:
**23.03.83 Patentblatt 83/12**

(45) Bekanntmachung des Hinweises auf die Patenterteilung:
**24.06.87 Patentblatt 87/26**

(84) Benannte Vertragsstaaten:
**CH DE FR GB IT LI NL**

(56) Entgegenhaltungen:
**EP-A-0 059 036**
**EP-A-0 059 095**
**DE-A-2 259 970**
**FR-A-2 438 112**
**GB-A-2 081 736**
**GB-A-2 082 196**

(73) Patentinhaber: **BAYER AG, Konzernverwaltung RP Patentabteilung, D-5090 Leverkusen 1 Bayerwerk (DE)**

(72) Erfinder: **Neeff, Rütger, Dr., Berta-von Suttner-Strasse 22, D-5090 Leverkusen (DE)**
Erfinder: **Claussen, Uwe, Dr., Carl-Rumpff-Strasse 29, D-5090 Leverkusen (DE)**

EP 0 074 523 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft flüssigkristallines Material enthaltend mindestens einen Anthrachinonfarbstoff der Formel:

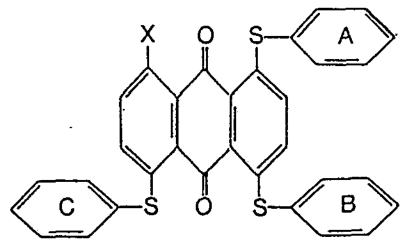

I

in der

X für H oder 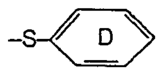

steht, wobei die Ringe A, E, C und D 1, 2, 3, 4 oder 5, vorzugsweise 1, 2 oder 3 Substituenten aus der Reihe gegebenenfalls durch –O–, –S– und/oder –NR– unterbrochenes Alkyl, wobei R Alkyl oder Aryl bezeichnet, Cycloalkyl, Aralkyl, gegebenenfalls durch –O–, –S– oder –NR– unterbrochenes Alkoxy, wobei R Alkyl oder Aryl bezeichnet, Halogen, Trifluormethyl, Nitro, gegebenenfalls substituiertes Amino, Carbonsäurederivat, Sulfonsäurederivat oder gegebenenfalls substituierte Sulfonamidgruppen, tragen können, wobei für den Fall,

dass X für 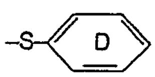

steht, die vier α-Substituenten am Antrachinonring gleich sind und mit Ausnahme von 1,4,5,8-Tetra-(p-tert.-butylphenylthio)-anthrachinon, und die Verwendung dieses flüssigkristallinen Materials in optoelektronischen Anzeigeelementen. Weiterhin betrifft die Erfindung neue Anthrachinonfarbstoffe. Die erfindungsgemäss verwendeten Farbstoffe besitzen eine ausgezeichnete Lichtechtheit, einen hohen Ordnungsgrad und in überwiegendem Masse eine für die technische Verwendung notwendige gute Löslichkeit in flüssigkristallinen Materialien. Die genannten Eigenschaften sind für die Eignung als Farbstoffe in optoelektronischen Anzeigeelementen die nach dem guest-host-Prinzip arbeiten, von entscheidender Bedeutung (DE-OS 3 028 593).

Opto-elektronische Anzeigeelemente bestehen in der Regel aus 2 parallel (im Abstande von 5–50 μ) angeordneten Glasplatten. An deren Innenseiten werden Elektroden angebracht, zwischen denen das flüssigkristalline Material eingebettet wird. Die Funktionsfähigkeit einer optoelektronischen Anzeige beruht auf der orientierten Struktur der Flüssigkristalle, die sich durch das angelegte elektrische Feld verändern lässt.

Die orientierte Struktur der flüssigkristallinen Materialien kann sich geeigneten Farbstoffen mitteilen, so dass diese als «Gäste» an der Struktur teilnehmen.

Die erfindungsgemässen Farbstoffe liefern gelbe bis rote Farbtöne. Sie werden in guest-host-Anzeigen, deren Aufbau und Arbeitsweise bekannt ist (Heilmeyer et al Mol. Crystals and Liquid Cryst., 8. 293–309 (1969), DE-OS 2 639 675, DE-OS 2 568 568) als Lösung in einer nematischen Flüssigkristallmischung verwendet. Das flüssigkristalline Material als Wirtsphase enthält wenigstens einen Farbstoff der Formel I und kann daneben weitere Farbstoffe enthalten. Diese können dichroitische Eigenschaften besitzen oder nicht. Die Lösung besteht aus etwa 0,01 bis etwa 30 Gew.-%, vorzugsweise etwa 0,5 bis etwa 5 Gew.-% Farbstoff (als Gast) und aus der Wirtsphase, die überwiegend aus nematischem flüssigkristallinen Material besteht und weitere Zusätze, beispielsweise zur cholesterischen Orientierung enthalten kann. Die Erfindung betrifft demnach flüssigkristalline Materialien, welche Anthrachinonfarbstoffe der Formel (I) enthalten. Das flüssigkristalline Material hat vorzugsweise positive dielektrische Anisotrophie und kann in opto-elektronischen Anzeigevorrichtungen eingesetzt werden.

Von den verschiedenen Ordnungszuständen flüssigkristalliner Materialien sind die nematischen und cholesterinischen bevorzugt, entsprechend den Definitionen, wie sie beispielsweise bei R. Steinsträsser, L. Pohl; Angew. Chem. 85, 706 (1973) angegeben sind.

Im feldlosen Zustand kann man zwei Orientierungen des flüssigkristallinen Materials unterscheiden, die von der Eigenschaft der Phasengrenze und damit von der Vorbehandlung der Glasplatten abhängen. Je nachdem ob die lange Achse der Moleküle, aus denen die flüssigkristalline Phase besteht, senkrecht oder waagerecht zur Plattenoberfläche gerichtet ist, spricht man von homöotroper oder homogener Textur. Die Herstellungstechniken zur Erzeugung geeigneter Oberflächen sind bekannt (Ullmann, 4. Aufl. (1976) Bd. XI, S. 657ff). Von den Dipoleigenschaften der flüssigkristallinen Verbindungen ist die dielektrische Anisotropie abhängig. Sie ist positiv, wenn das elektrische Feld eine homöotrope Ausrichtung bewirkt, negativ wenn sie homogen wird. Die Verwendung der erfindungsgemässen Farbstoffe in flüssigkristallinen Materialien mit positiver dielektrischer Anisotropie ist bevorzugt. Als flüssigkristalline Materialien geeignet sind z.B. Gemisch aus Alkyl(cyano-biphenyl), Alkoxy(cyano-biphenyl), Alkyl(cyano-terphenyl), Alkyl(cyanophenylcyclohexan) (PCH), Alkylbiphenylcyclohexan (BCH), Azoxyverbindungen, Schiff'sche Basen, Benzoesäurephenylestern, Thiobenzoesäurephenylestern und Terpyrimidinen. Üblicherweise werden eutektische Mischungen der Flüssigkristalle eingesetzt, wobei die Mischungsverhältnisse sowie die Mischungspartner in weiten Grenzen schwanken können. Derartige Mischungen sind z.T. handelsüblich. Zur Herstellung einer roten Anzeige sind z.B. Flüssigkristallsysteme auf der Basis Alkyl-4-cyanobiphenyl, Alkyl-4-cyanophenylpyrimidin und Alkyl-4-cyanophenylcyclohexan, z.B. Mischungen überwiegend aus 4'-n-Pentyl-4-cyanobiphenyl, 4'-n-Heptyl-4-cyanobiphenyl, 4'-n-Octyl-4-cyanobiphenyl und 4'-n-Pentyl-4-cyanoterphenyl und aus trans-4-Heptyl(4-cyanophenyl)-cyclohexan, trans-4-Pentyl-(4-cyanophenyl)cyclohexan, trans-4-Propyl(4'-cyanobiphenyl)cyclohexan bevorzugt.

Als Beispiele für käufliche und geeignete Flüssigkristallmischungen sind für eine positive DK-Anisotropie Produkte auf Cyanopyrimidin- und Cyanoester-Basis sowie Mischungen aus BCH, PCH und PCH-Ester und PCH, BCH, BCH-Ester und Terphenyl (z.B. «Ro-TN-403» «Ro-TN-103», «Merck 1221 TNC», «Merck 1291 TNC») zu nennen.

Neben den flüssigkristallinen Verbindungen und dem Farbstoff kann das flüssigkristalline Material weitere übliche Zusätze enthalten, z.B. optisch aktive Verbindungen, die eine nematische Phase in eine cholesterinische umwandeln können oder Substanzen zur Verminderung der Schwellenspannung usw.

Die Güte der guest-host Wechselwirkung ist durch die mittlere Abweichung der geometrischen Achse der Farbstoffmoleküle von der durch die Moleküle des flüssigkristallinen Materials vorgegebenen Vorzugsrichtung angebbar. Man kann einen Ordnungsgrad S definieren, der die mittlere Abweichung berücksichtigt und bei vollkommener Ordnung den Wert 1.0 annimmt. Praktisch wird dieser Wert nicht erreicht, vielmehr sind die S-Werte < 1.0. Die in der Literatur angegebenen Werte sind wegen unterschiedlicher Messtechniken nicht ohne weiteres vergleichbar. Die Definition des Ordnungsgrades und seine Bedeutung ist bei D.L. White und G.N. Taylor: J. Appl. Phys. (5) 4718-23 1974 oder beispielsweise in EP-OS 2 104 beschrieben.

Für die technische Verwendung sind Farbstoffe mit hohem Ordnungsgrad besonders wertvoll. Jedoch müssen eine Reihe weiterer Eigenschaften vorhanden sein. Die photochemische Stabilität muss sehr gut sein, der Farbton darf im Licht weder verschiessen noch ausbleichen. Darüber hinaus wird eine gute chemische Beständigkeit in dem komplex zusammengesetzten flüssigkristallinen Medium verlangt. Schliesslich muss sich der Farbstoff gut lösen und darf auch bei anhaltend tiefen Temperaturen nicht kristallisieren.

Es ist offensichtlich, dass es nicht viele Stoffe gibt, die die Gesamtheit aller Eigenschaften in zufriedenstellender Weise erfüllen. Eine notwendige Voraussetzung für die Brauchbarkeit der Farbstoffe ist der Dichroismus der Lichtabsorption in Abhängigkeit von der Orientierung der Wirts-Flüssigkristalle.

Es bedeutet eine besondere Schwierigkeit, die Farbstoffe unter Erhalt der dichroitischen Echtheits- und Farb-Eigenschaften ausreichend löslich zu machen. Gerade zur Optimierung der Löslichkeit sind zahlreiche Versuche notwendig und es lässt sich diese Eigenschaft nur sehr unvollkommen voraussagen.

Es war sehr überraschend, dass Verbindungen der Formel 1 hervorragende dichroitische Farbstoffeigenschaften mit einer guten Löslichkeit verbinden.

Bevorzugte Substituenten für die Ringe A, B, C und D in Formel I sind: gegebenenfalls durch –O–, –S– und/oder –NR– unterbrochenes $C_1$–$C_{18}$-Alkyl, wobei R $C_1$–$C_8$-Alkyl oder Phenyl bezeichnet, $C_3$–$C_7$-Cycloalkyl, Phenyl-$C_1$–$C_8$-alkyl, Naphthyl-$C_1$–$C_8$-Alkyl, Fluor, Chlor, Brom, Trifluormethyl, Nitro, gegebenenfalls durch $C_1$–$C_8$-Alkyl, $C_1$–$C_8$-Alkoxy-$C_1$–$C_8$-alkyl, $C_1$–$C_8$-Alkylthio-$C_1$–$C_8$-alkyl und Phenyl mono- oder disubstituiertes Amino, Phenylamino, gegebenenfalls durch –O–, –S– und/oder –NR– unterbrochenes $C_1$–$C_{18}$-Alkoxy, wobei R $C_1$–$C_8$-Alkyl oder Phenyl bezeichnet, Carbonsäure-$C_1$–$C_8$-alkylester-, gegebenenfalls im Phenylrest durch $C_1$–$C_8$-Alkyl substituierte Carbonsäurephenylester-, gegebenenfalls im Phenylrest durch $C_1$–$C_8$-Alkyl substituierte Sulfonsäurephenylester-, gegebenenfalls durch $C_1$–$C_8$-Alkyl, $C_1$–$C_8$-Alkoxy-$C_1$–$C_8$-alkyl, $C_1$–$C_8$-Alkylthio-$C_1$–$C_8$-alkyl und Phenyl mono- oder disubstituierte Sulfonamidgruppen.

Bevorzugte Farbstoffe in den flüssigkristallinen Materialien sind solche der Formel II

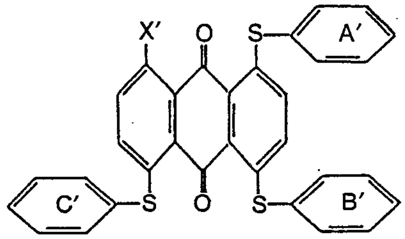

II

in der X' H oder 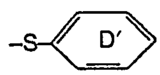

bezeichnet und die Ringe A', B', C' und D' durch einen oder zwei Substituenten aus der Reihe gegebenenfalls durch –O–, –S– und/oder –NR– unterbrochenes Alkyl, wobei R Alkyl oder Aryl bezeichnet, gegebenenfalls durch –O–, –S– und/oder –NR– unterbrochenes Alkoxy, wobei R Alkyl oder Aryl bezeichnet, Halogen, Trifluormethyl, Carbonsäureester-, Sulfonsäureester- oder Sulfonamidgruppen substituiert sein können, wobei für

den Fall, dass X für 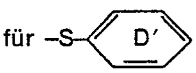

steht, die vier α-Substituenten am Anthrachinonring gleich sind und mit Ausnahme von 1,4,5,8-Tetra(phenylthio)-anthrachinon und 1,4,5,8-Tetra-(p-tert.-butylphenylthio)-anthrachinon.

Bevorzugte Substituenten der Ringe A', B', C' und D' in Formel II sind: gegebenenfalls durch –O–, –S– und/oder –NR– unterbrochenes $C_1$–$C_{12}$-Alkyl, wobei R $C_1$–$C_8$-Alkyl oder Phenyl bezeichnet, gegebenenfalls durch –O–, –S– oder –NR– unterbrochenes $C_1$–$C_{12}$-Alkoxy, wobei R $C_1$–$C_8$-Alkyl oder Phenyl bezeichnet, Fluor, Chlor, Brom, Trifluormethyl, Carbonsäure-$C_1$–$C_8$-alkylester, gegebenenfalls im Phenylrest durch $C_1$–$C_8$-Alkyl substituierte Carbonsäurephenylester, gegebenenfalls im Phenylrest durch $C_1$–$C_8$-Alkyl substituierte Sulfonsäurephenylester, gegebenenfalls durch $C_1$–$C_8$-Alkyl, $C_1$–$C_8$-Alkoxy-$C_1$–$C_8$-alkyl, $C_1$–$C_8$-Alkylthio-$C_1$–$C_8$-alkyl und Phenyl mono- oder disubstituierte Sulfonamidgruppen.

Besonders bevorzugt sind die Ringe A', B', C' und D' in Formel II unsubstituiert, oder sie tragen einen der vorgenannten Substituenten.

Die Erfindung betrifft weiterhin neue Farbstoffe der Formel

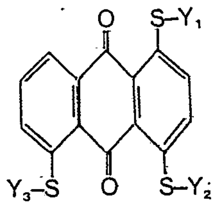

III

in der

$Y_1$, $Y_2$, $Y_3$ Phenyl oder durch gegebenenfalls durch –O–, –S– und/oder –NR– unterbrochenes $C_1$–$C_{12}$-Alkyl, wobei R $C_1$–$C_8$-Alkyl bezeichnet, gegebenenfalls durch –O–, –S– und/oder –NR– unterbrochenes $C_1$–$C_{12}$-Alkoxy, wobei R $C_1$–$C_8$-Alkyl bezeichnet, Fluor, Chlor, Brom, Trifluormethyl, Carbonsäure-$C_1$–$C_8$-alkylester gegebenenfalls im Phenylrest durch $C_1$–$C_8$-Alkyl substituierte Carbonsäurephenylester, gegebenenfalls im Phenylrest durch $C_1$–$C_8$-Alkyl substituierte Sulfonsäurephenylester, oder gegebenenfalls durch $C_1$–$C_8$-Alkyl, $C_1$–$C_8$-Alkoxy-$C_1$–$C_8$-alkyl, $C_1$–$C_8$-Alkylthio-$C_1$–$C_8$-alkyl und Phenyl mono oder disubstituierte Sulfonamidgruppen substituiertes Phenyl, bezeichnen, mit Ausnahme der Verbindungen, bei denen $Y_1$, $Y_2$ und $Y_3$ gleichzeitig Phenyl, 2-Methylphenyl, 4-Methylphenyl, 4-t-Butylphenyl oder Pentachlorphenyl bezeichnen.

Die Erfindung betrifft weiterhin neue Farbstoffe der Formel

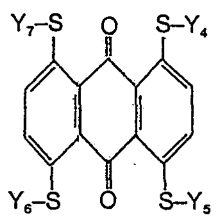

IV

in der

$Y_4$, $Y_5$, $Y_6$, $Y_7$ die zu Formel III für $Y_1$, $Y_2$, $Y_3$ aufgeführten Bezeichnungen besitzen, mit Ausnahme der Verbindungen, bei denen $Y_4$, $Y_5$, $Y_6$ und $Y_7$ gleichzeitig Phenyl, 2-Methylphenyl, 4-Methylphenyl, 3-Ethylphenyl, 3,4-Dimethylphenyl, 4-t-Butylphenyl, 4-i-Octylphenyl, 4-Dodecylphenyl, 3-Methoxyphenyl, 2-Ethoxyphenyl, 4-n-Butoxyphenyl, 2-Chlorphenyl, 4-Chlorphenyl, 4-Fluorphenyl, 3-Bromphenyl oder Pentachlorphenyl bezeichnen.

Die Farbstoffe der Formel

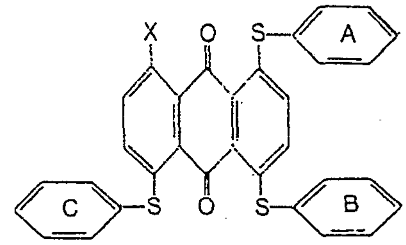

in der

X für H oder 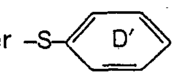

steht, wobei die Ringe A, B, C und D 1, 2, 3, 4, oder 5, vorzugsweise 1, 2 oder 3 Substituenten aus der Reihe gegebenenfalls durch –O–, –S– und/oder –NR– unterbrochenes Alkyl, wobei R Alkyl oder Aryl bezeichnet, Cycloalkyl, Aralkyl, gegebenenfalls durch –O–, –S– oder –NR– unterbrochenes Alkoxy, wobei R Alkyl oder Aryl bezeichnet, Halogen, Trifluormethyl, Nitro, gegebenenfalls substituiertes Amino, Carbonsäurederivat, Sulfonsäurederivat oder gegebenenfalls substituierte Sulfonamidgruppen, tragen können, sind von besonderem Wert zum Aufbau von Schwarzmischungen für Flüssigkristallzusammensetzungen in Kombination mit Anthrachinon- und Azofarbstoffen. Für derartige Kombinationen geeignete Anthrachinonfarbstoffe sind z.B. aus EP-OS 26 004, DE-OS 3 009 940, DE-OS 3 009 974, EP-OS 34 832, DE-OS 2 903 095, DE-OS 3 028 593, DE-OS 3 036 853 und DE-OS 3 038 372 bekannt; besonders geeignet sind Tetraaminoanthrachinon-Verbindungen.

Geeignete kombinierbare Azofarbstoffe sind beispielsweise aus DE-OS 2 837 500, DE-OS 2 627 215, DE-OS 2 631 428, FR-PS 2 243 980 DE-OS 2 815 860 bekannt; besonders geeignet sind Diazofarbstoffe, die sich von substituierten Benzidinen ableiten.

Als Beispiel seien Mischungen aus den Farbstoffen der Formel III oder IV mit den Farbstoffen der Formeln

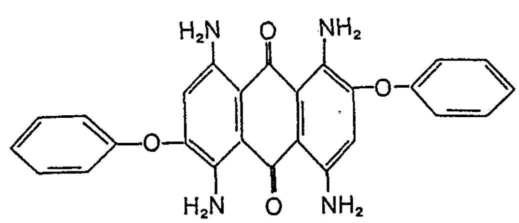

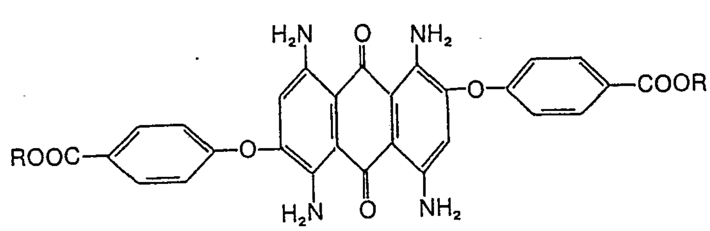

mit R = $C_1$–$C_6$-Alkyl wie Methyl, Ethyl, Propyl, Butyl, Pentyl, Hexyl,

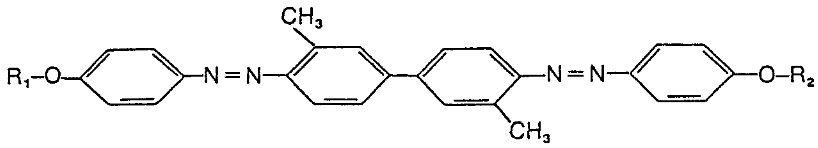

mit $R_1$, $R_2$ = $-CH_3$, $-C_2H_5-$, $-C_3H_7$, 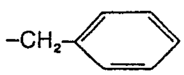 erwähnt.

Die Herstellung der Farbstoffe der Formel I erfolgt nach an sich bekannten Verfahren. Z.B. erhält man Verbindungen, bei denen die Ringe A, B und C bzw. A, B, C und D gleich sind in bekannter Weise durch Umsetzung von 1,4,5-Tri- bzw. 1,4,5,8-Tetra-chloranthrachinonen mit Thiophenolen. Farbstoffe der Formel I, bei denen X = H ist und der Ring A von den Ringen B und C verschieden ist, erhält man z.B. durch Austausch der Nitrogruppe von 5-Nitro-1,4-dichlor-anthrachinon unter milden Bedingungen mit einem entsprechenden Thiophenol, gefolgt vom Austausch der Chloratome gegen anders substituierte Thiophenole unter drastischeren Bedingungen. Schliesslich lassen sich Gemische von verschieden substituierten Thiophenolen in die oben erwähnten Austauschreaktionen einsetzen. Verfahren zur Herstellung der erfindungsgemäss in Flüssigkristallsystemen verwendbaren Verbindungen sind z.B. aus der DE-OS 2 259 970 bekannt.

Die Verbindungen fallen in der Regel in ungenügender Reinheit für ihre Verwendung in Flüssigkristallzusammensetzungen an, so dass zusätzliche Massnahmen, wie Umkristallisieren, Säulenchromatographie oder eine Flüssig-flüssig-Verteilung notwendig sind.

Die nachfolgenden Beispiele erläutern die Erfindung, ohne sie einzuschränken.

Beispiel 1

10 g 5-Nitro-1,4-dichlor-anthrachinon und 7,7 g Kaliumcarbonat werden in 50 ml Dimethyl-formamid mit 17 g 4-tert.-Butyl-thiophenol versetzt, in 1 Std. auf 125–130 °C erwärmt und 2 Stdn. bei dieser Temperatur gerührt. Nach Abkühlen auf 70 °C versetzt man mit 50 ml Methanol, saugt das in orangeroten Prismen kristallisierte Produkt ab, wäscht mit Methanol und Wasser und erhält nach dem Trocknen 18,9 g = 87% d. Th. 1,4,5-Tri-(4-tert.-butyl-phenylthio)-anthrachinon, das nach säulenchromatographischer Reinigung in der nematischen Phase bestehend aus einer Mischung von ca. 24% trans-4-Heptyl(4-cyanophenyl)cyclohexan,
37% trans-4-Pentyl(4-cyanophenyl)-cyclohexan,
26% trans-4-Propyl(4-cyanophenyl)-cyclohexan und
12% trans-4-Pentyl(4′-cyanobiphenyl)cyclohexan,
einen Ordnungsgrad S von 0,72 aufweist. Verwendet man in Beispiel 1 anstelle von 4-tert.-Butylthiophenol entsprechend substituierte Thiophenole, so erhält man analog die in der Tabelle 1 angegebenen Farbstoffe:

Tabelle 1

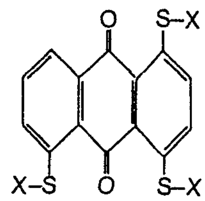

| Beispiel | X | Ordnungsgrad S |
|---|---|---|
| 2 | 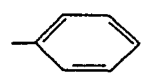 | 0,69 |
| 3 | 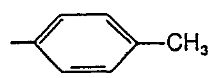 | 0,70 |
| 4 | 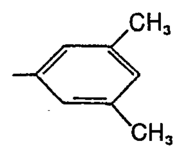 | 0,72 |
| 5 | 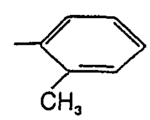 | 0,71 |
| 6 | 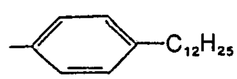 | 0,67 |
| 7 | 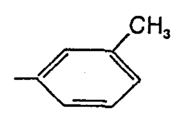 | 0,70 |
| 8 | 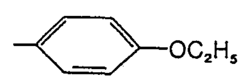 | 0,70 |
| 9 | 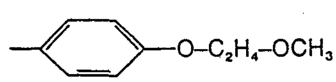 | 0,69 |
| 10 | 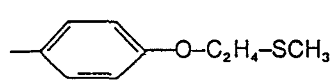 | 0,70 |
| 11 | 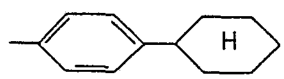 | 0,67 |

Tabelle 1 (Fortsetzung)

| Beispiel | X | Ordnungsgrad S |
|---|---|---|
| 12 | 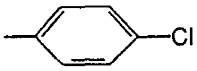 | 0,70 |
| 13 | 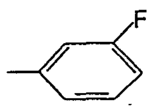 | 0,67 |
| 14 | 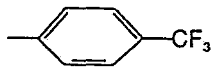 | 0,66 |
| 15 | 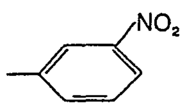 | 0,68 |
| 16 | 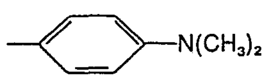 | 0,65 |
| 17 | 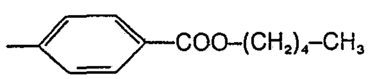 | 0,69 |
| 18 | 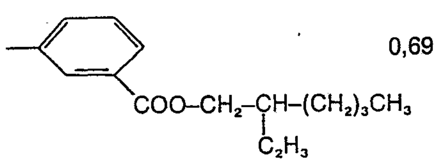 | 0,69 |
| 19 | 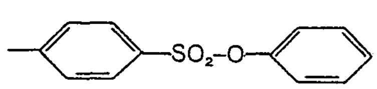 | 0,70 |
| 20 | 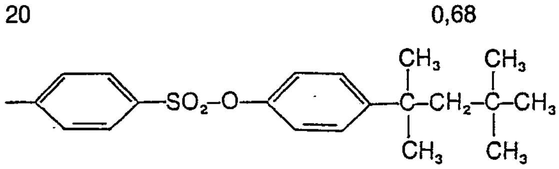 | 0,68 |

Tabelle 1 (Fortsetzung)

| Beispiel | X | Ordnungsgrad S |
|---|---|---|
| 21 | 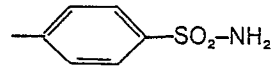 | 0,67 |
| 22 | 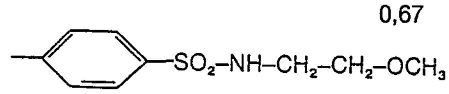 | 0,67 |
| 23 | 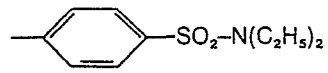 | 0,67 |
| 24 | 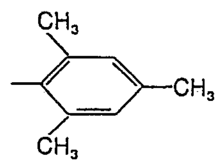 | 0,70 |
| 25 | 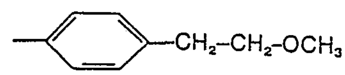 | 0,69 |
| 26 | 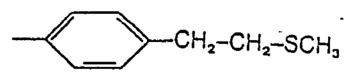 | 0,69 |

Beispiel 27

10 g 5-Nitro-1,4-dichlor-anthrachinon und 2,25 g Kaliumcarbonat werden in 50 ml Dimethylformamid mit 4,5 g 4-Chlorthiophenol versetzt und 2 Stdn. bei 40–50 °C gerührt. Man trägt dann nacheinander 4,7 g Kaliumcarbonat und 11,3 g 4-tert.-Butyl-thiophenol ein und erwärmt so lange auf 120–125 °C, bis die Farbstoffbildung, chromatographisch nachgewiesen, beendet ist. Nach dem Abkühlen auf 70 °C versetzt man mit 50 ml Methanol, saugt das in orangefarbenen Prismen kristallisierte Produkt bei 20–25 °C ab, wäscht mit Methanol und Wasser und erhält nach dem Trocknen 18,75 g = 89% d. Th.

1,4-Bis-(4-tert.-Butylphenylthio)-5-(4-chlorphenylthio)-anthrachinon,

das nach säulenchromatographischer Reinigung in der nematischen Phase bestehend aus einer Mischung von ca

24% trans-4-Heptyl(4-cyanophenyl)cyclohexan,
37% trans-4-Pentyl-(4-cyanophenyl)cyclohexan,
26% trans-4-Propyl(4-cyanophenyl)cyclohexan
und 12% trans-4-Pentyl(4′-cyanobiphenyl)cyclohexan,

einen Ordnungsgrad S von 0,71 aufweist. Verwendet man in Beispiel 27 anstelle von 4-Chlorthiophenol und 4-tert.-Butylthiophenol entsprechend substituierte Thiophenole, so erhält man analog die in der Tabelle 2 angegebenen Farbstoffe:

Tabelle 2

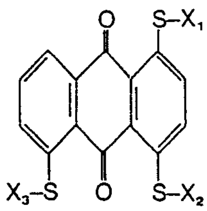

| Beispiel | $X_1$ | $X_2$ | $X_3$ | Ordnungsgrad S |
|---|---|---|---|---|
| 28 | 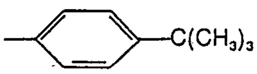 | 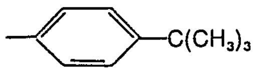 | 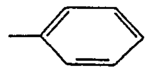 | 0,73 |
| 29 | 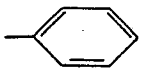 | 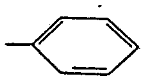 | 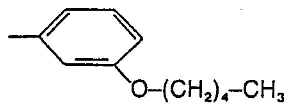 | 0,72 |
| 30 | 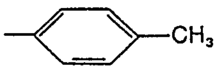 | 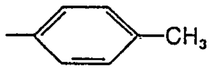 | 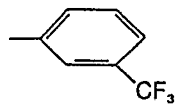 | 0,68 |
| 31 | 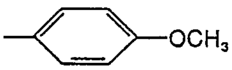 | 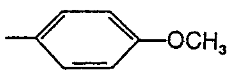 | 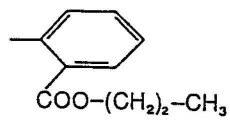 | 0,68 |
| 32 | 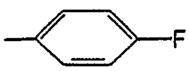 | 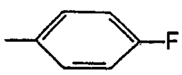 | 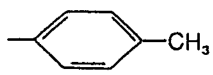 | 0,67 |
| 33 | 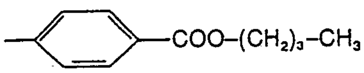 | 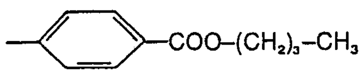 | 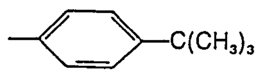 | 0,65 |
| 34 | 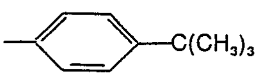 | 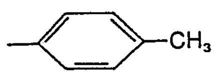 | 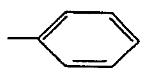 | 0,72 |
| 35 | 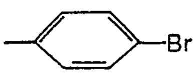 | 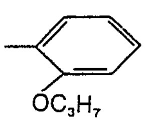 | 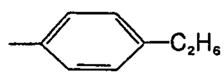 | 0,70 |
| 36 | 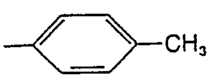 | 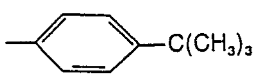 | 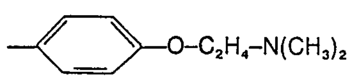 | 0,65 |
| 37 | 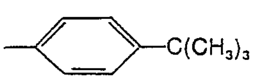 | 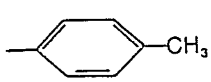 | 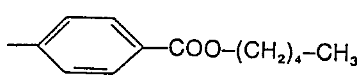 | 0,68 |
| 38 | 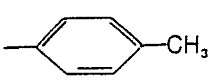 | 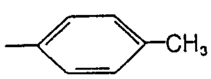 | 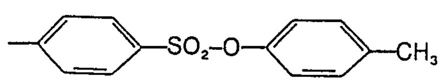 | 0,71 |

Beispiel 39
(nicht erfindungsgemäss; dient nur zur Erläuterung der Herstellung)

15 g 1,4,5,8-Tetrachlor-anthrachinon, 75 g Dimethylformamid, 23 g Thiophenol und 15 g Kaliumcarbonat werden etwa 3 h auf 125–130 °C erhitzt. Man kocht kurz auf, saugt nach dem Erkalten den in schönen roten Kristallen ausgefallenen Farbstoff ab und wäscht mit Methanol und Wasser. Nach dem Trocknen erhält man 26 g 1,4,5,8-Tetra-(phenylthio)-anthrachinon = 90% der Theorie.

Nach Reinigung durch Chromatographie an Kieselgel mit einem Belastungsverhältnis von 1:100 bis 1:1000 arbeitet man den Farbstoff in eine nematische Phase wie in Beispiel 1 angegeben ein. Der Ordnungsgrad beträgt 0,68.

Verwendet man in Beispiel 39 anstelle von Thiophenol entsprechend substituierte Thiophenole, so erhält man analog die in der Tabelle 3 angegebenen Farbstoffe, deren Ordnungsgrad in der vorstehend genannten Phase angegeben ist.

Tabelle 3

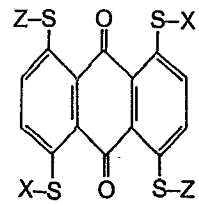

| Beispiel | X | Z | Ordnungsgrad S |
|---|---|---|---|
| 40 | 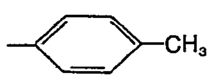 | 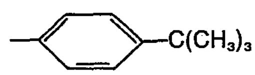 | 0,69 |
| 41 | 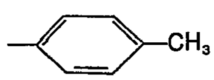 | 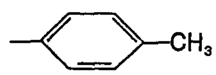 | 0,70 |
| 42 | 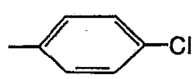 | 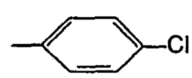 | 0,68 |
| 43 | 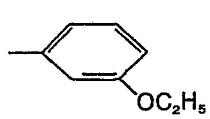 | 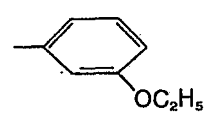 | 0,65 |
| 44 | 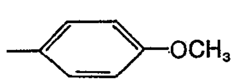 | 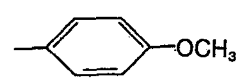 | 0,70 |

**Patentansprüche**

1. Flüssigkristallines Material enthaltend mindestens einen Anthrachinonfarbstoff der Formel

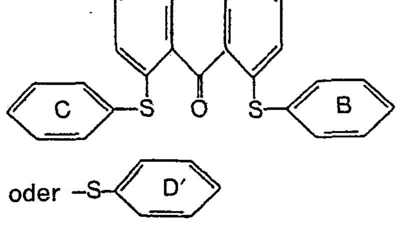

I

in der
X für H oder 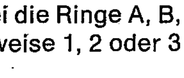

steht, wobei die Ringe A, B, C und D 1, 2, 3, 4, oder 5, vorzugsweise 1, 2 oder 3 Substituenten aus der Reihe gegebenenfalls durch –O–, –S– und/oder –NR– unterbrochenes Alkyl, wobei R Alkyl oder Aryl bezeichnet, Cycloalkyl, Aralkyl, gegebenenfalls durch –O–, –S– oder –NR– unterbrochenes Alkoxy, wobei R Alkyl oder Aryl bezeichnet, Halogen, Trifluormethyl, Nitro, gegebenenfalls substituiertes Amino, Carbonsäurederivat, Sulfonsäurederivat oder gegebenenfalls substituierte Sulfonamidgruppen, tragen können, wobei für den Fall, dass

X für 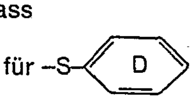 steht,

die vier α-Substituenten am Anthrachinonring gleich sind und mit Ausnahme von 1,4,5,8-Tetra-(phenylthio)-anthrachinon und 1,4,5,8-Tetra-(p-tert.-butylphenylthio)-anthrachinon.

2. Flüssigkristallines Material gemäss Anspruch 1 enthaltend mindestens einen Anthrachinonfarbstoff der Formel I, in der die Ringe A, B, C und/oder gegebenenfalls D unsubstituiert sind oder durch einen Substituenten aus der Reihe gegebenenfalls durch –O–, –S– und/oder –NR– unterbrochenes $C_1$–$C_{18}$-Alkyl, wobei R $C_1$–$C_8$-Alkyl oder Phenyl bezeichnet, $C_3$–$C_7$-Cycloalkyl, Phenyl-$C_1$–$C_8$-alkyl, Naphthyl-$C_1$–$C_8$-alkyl, Fluor, Chlor, Brom, Trifluormethyl, Nitro, gegebenenfalls durch $C_1$–$C_8$-Alkyl, $C_1$–$C_8$-Alkoxy-$C_1$–$C_8$-alkyl, $C_1$–$C_8$-Alkylthio-$C_1$–$C_8$-alkyl und Phenyl mono- oder disubstituiertes Amino, Phenylamino, gegebenenfalls durch –O–, –S– und/oder –NR– unterbrochenes $C_1$–$C_{18}$-Alkoxy, wobei R $C_1$–$C_8$-Alkyl oder Phenyl bezeichnet, Carbonsäure-$C_1$–$C_8$-alkylester-, gegebenenfalls im Phenylrest durch $C_1$–$C_8$-Alkyl substituierte Carbonsäurephenylester-, gegebenenfalls im Phenylrest durch $C_1$–$C_8$-Alkyl substituierte Sulfonsäurephenylester-, gegebenenfalls durch $C_1$–$C_8$-Alkyl, $C_1$–$C_8$-Alkoxy-$C_1$–$C_8$-alkyl, $C_1$–$C_8$-Alkylthio-$C_1$–$C_8$-alkyl und Phenyl mono- oder disubstituierte Sulfonamidgruppen substituiert sind.

3. Flüssigkristallines Material gemäss Anspruch 1 enthaltend mindestens einen Anthrachinonfarbstoff der Formel

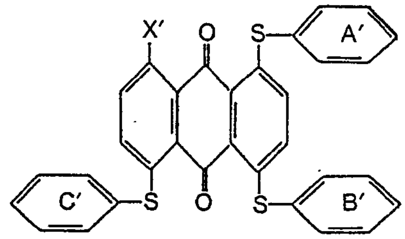

II

in der X′ H oder 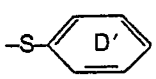

bezeichnet und die Ringe A′, B′, C′ und/oder D′ durch einen oder zwei Substituenten aus der Reihe gegebenenfalls durch –O–, –S– und/oder –NR– unterbrochenes Alkyl, wobei R Alkyl oder Aryl bezeichnet, gegebenenfalls durch –O–, –S– und/ oder –NR– unterbrochenes Alkoxy, wobei R Alkyl oder Aryl bezeichnet, Halogen, Trifluormethyl, Carbonsäureester-, Sulfonsäureester- oder Sulfonamidgruppen substituiert sein können.

4. Flüssigkristallines Material gemäss Anspruch 3 enthaltend mindestens einen Anthrachinonfarbstoff der Formel II, in der die Ringe A′, B′, C′, und gegebenenfalls D′ durch einen Substituenten aus der Reihe gegebenenfalls durch –O–, –S– und/oder –NR– unterbrochenes $C_1$–$C_{12}$-Alkyl, wobei R $C_1$–$C_8$-Alkyl oder Phenyl bezeichnet, gegebenenfalls durch –O–, –S– oder –NR– unterbrochenes $C_1$–$C_{12}$-Alkoxy, wobei R $C_1$–$C_8$-Alkyl oder Phenyl bezeichnet, Fluor, Chlor, Brom, Trifluormethyl, Carbonsäure-$C_1$–$C_8$-alkylester, gegebenenfalls im Phenylrest durch $C_1$–$C_8$-Alkyl substituierte Carbonsäurephenylester, gegebenenfalls im Phenylrest durch $C_1$–$C_8$-Alkyl substituierte Sulfonsäurephenylester, gegebenenfalls durch $C_1$–$C_8$-Alkyl, $C_1$–$C_8$-Alkoxy-$C_1$–$C_8$-alkyl, $C_1$–$C_8$-Alkylthio-$C_1$–$C_8$-alkyl und Phenyl mono- oder disubstituierte Sulfonamidgruppen substituiert sein können.

5. Flüssigkristallines Material enthaltend ein Gemisch aus mindestens einem Farbstoff der Formel

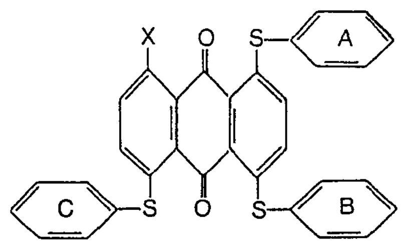

I

in der
X für H oder 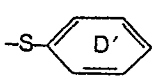

steht, wobei die Ringe A, B, C und D 1, 2, 3, 4, oder 5, vorzugsweise 1, 2 oder 3 Substituenten aus der Reihe gegebenenfalls durch –O–, –S– und/oder –NR– unterbrochenes Alkyl, wobei R Alkyl oder Aryl bezeichnet, Cycloalkyl, Aralkyl, gegebenenfalls durch –O–, –S– oder –NR– unterbrochenes Alkoxy, wobei R Alkyl oder Aryl bezeichnet, Halogen, Trifluormethyl, Nitro, gegebenenfalls substituiertes Amino, Carbonsäurederivat, Sulfonsäurederivat oder gegebenenfalls substituierte Sulfonamidgruppen, tragen können, mindestens einem Anthrachinonfarbstoff, vorzugsweise einem Tetraaminoanthrachinonfarbstoff und einem Azofarbstoff, vorzugsweise einem Diazofarbstoff, der sich vom substituierten Benzidin ableitet.

6. Flüssigkristallines Material gemäss den Ansprüchen 1 bis 5, enthaltend etwa 0,01 bis etwa 30 Gew.-%, vorzugsweise etwa 0,5 bis etwa 5 Gew.-% an Anthrachinonfarbstoff.

7. Farbstoff der Formel

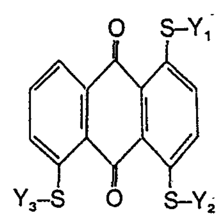

III

in der
$Y_1$, $Y_2$, $Y_3$ Phenyl oder durch gegebenenfalls durch –O–, –S– und/oder –NR– unterbrochenes $C_1$–$C_{12}$-Alkyl, wobei R $C_1$–$C_8$-Alkyl bezeichnet, gegebenenfalls durch –O–, –S– und/oder –NR– unterbrochenes $C_1$–$C_{12}$-Alkoxy, wobei R $C_1$–$C_8$-Alkyl bezeichnet, Fluor, Chlor, Brom Trifluormethyl, Carbonsäure-$C_1$–$C_8$-alkylester, gegebenenfalls im Phenylrest durch $C_1$–$C_8$-Alkyl substituierte Carbonsäurephenylester, substituierte Sulfonsäurephenylester, oder gegebenenfalls durch $C_1$–$C_8$-Alkyl, $C_1$–$C_8$-Alkoxy-$C_1$–$C_8$-alkyl, $C_1$–$C_8$-Alkylthio-$C_1$–$C_8$-alkyl und Phenyl mono- oder disubstituierte Sulfonamidgruppen substituiertes Phenyl, bezeichnen, mit Ausnahme der Verbindungen, bei denen $Y_1$, $Y_2$ und $Y_3$ gleichzeitig Phenyl, 2-Methylphenyl, 4-Methylphenyl, 4-t-Butylphenyl oder Pentachlorphenyl bezeichnen.

8. Farbstoff der Formel

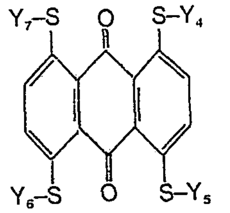

IV

in der

$Y_4$, $Y_5$, $Y_6$, $Y_7$ die zu Formel III für $Y_1$, $Y_2$, $Y_3$ aufgeführten Bezeichnungen besitzen, mit Ausnahme der Verbindungen, bei denen $Y_4$, $Y_5$, $Y_6$ und $Y_7$ gleichzeitig Phenyl, 2-Methylphenyl, 4-Methylphenyl, 3-Ethylphenyl, 3,4-Dimethylphenyl, 4-t-Butylphenyl, 4-i-Octylphenyl, 4-Dodecylphenyl, 3-Methoxyphenyl, 2-Ethoxyphenyl, 4-n-Butoxyphenyl, 2-Chlorphenyl, 4-Chlorphenyl, 4-Fluorphenyl, 3-Bromphenyl oder Pentachlorphenyl bezeichnen.

9. Farbstoff der Formel

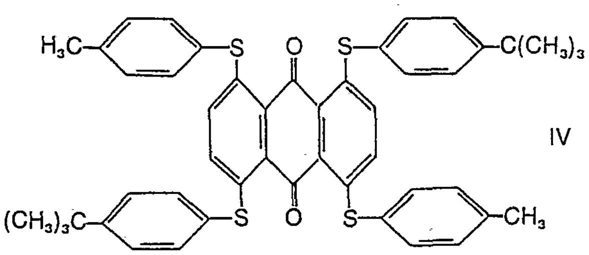

IV

**Claims**

1. Liquid-crystalline material containing at least one anthraquinone dyestuff of the formula

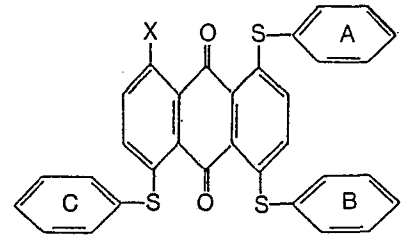

I

in which

X represents H or 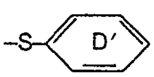 ,

it being possible for the rings A, B, C and D to carry 1, 2, 3, 4, or 5, preferably 1, 2 or 3, substituents from the series comprising alkyl which is optionally interrupted by –O–, –S– and/or –NR–, R denoting alkyl or aryl, cycloalkyl, aralkyl, alkoxy which is optionally interrupted by –O–, –S– or –NR–, R denoting alkyl or aryl, halogen, trifluoromethyl, nitro, optionally substituted amino, carboxylic acid derivative, sulphonic acid derivative or optionally substituted sulphonamide groups, wherein, in the case where

X represents 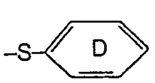 ,

the four α-substituents on the anthraquinone ring are identical, and with the exception of 1,4,5,8-tetra(phenylthio)-anthraquinone and 1,4,5,8-tetra-(p-tert.-butylphenylthio)-anthraquinone.

2. Liquid-crystalline material according to Claim 1 containing at least one anthraquinone dyestuff of the formula I in which the rings A, B, C and/or optionally D are unsubstituted or are substituted by a substituent from the series comprising $C_1$–$C_{18}$-alkyl which is optionally interrupted by –O–, –S– and/or –NR–, R denoting $C_1$–$C_8$-alkyl or phenyl, $C_3$–$C_7$-cycloalkyl, phenyl-$C_1$–$C_8$-alkyl, naphthyl-$C_1$–$C_8$-alkyl, fluorine, chlorine, bromine, trifluoromethyl, nitro, amino which is optionally monosubstituted or disubstituted by $C_1$–$C_8$-alkyl, $C_1$–$C_8$-alkoxy-$C_1$–$C_8$-alkyl, $C_1$–$C_8$-alkylthio-$C_1$–$C_8$-alkyl and phenyl, phenylamino, $C_1$–$C_{18}$-alkoxy which is optionally interrupted by –O–, –S– and/or –NR–, R denoting $C_1$–$C_8$-alkyl or phenyl, $C_1$–$C_8$-alkyl carboxylate groups, phenyl carboxylate groups which are optionally substituted in the phenyl radical by $C_1$–$C_8$-alkyl, phenyl sulphonate groups which are optionally substituted in the phenyl radical by $C_1$–$C_8$-alkyl, and sulphonamide groups which are optionally monosubstituted or disubstituted by $C_1$–$C_8$-alkyl, $C_1$–$C_8$-alkoxy-$C_1$–$C_8$-alkyl, $C_1$–$C_8$-alkylthio-$C_1$–$C_8$-alkyl and phenyl.

3. Liquid-crystalline material according to Claim 1 containing at least one anthraquinone dyestuff of the formula

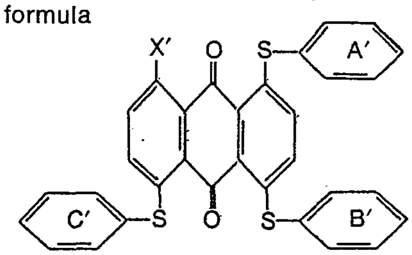

II

in which

X′ denotes H or 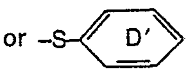

and the rings A′, B′, C′ and/or D′ can be substituted by one or two substituents from the series comprising alkyl which is optionally interrupted by –O–, –S– and/or –NR–, R denoting alkyl or aryl, alkoxy which is optionally interrupted by –O–, –S– and/or –NR–, R denoting alkyl or aryl, halogen, trifluoromethyl, carboxylic acid ester groups, sulphonic acid ester groups or sulphonamide groups.

4. Liquid-cristalline material according to Claim 3 containing at least one anthraquinone dyestuff of the formula II in which the rings A′, B′, C′ and, optionally, D′ can be substituted by a substituent from the series comprising $C_1$–$C_{12}$-alkyl which is optionally interrupted by –O–, –S– and/or –NR–, R denoting $C_1$–$C_8$-alkyl or phenyl, $C_1$–$C_{12}$-alkoxy which is optionally interrupted by –O–, –S– or –NR–, R denoting $C_1$–$C_8$-alkyl or phenyl, fluorine, chlorine, bromine, trifluoromethyl, $C_1$–$C_8$-alkyl carboxylates, phenyl carboxylates, which are optionally substituted in the phenyl radical by $C_1$–$C_8$-alkyl, phenyl sulphonates, which are optionally substituted in the phenyl radical by $C_1$–$C_8$-alkyl, or sulphonamide groups, which are optionally monosubstituted or disubstituted by $C_1$–$C_8$-alkyl, $C_1$–$C_8$-alkoxy-$C_1$–$C_8$-alkyl, $C_1$–$C_8$-alkylthio-$C_1$–$C_8$-alkyl and phenyl.

5. Liquid-crystalline material containing a mixture comprising at least one dyestuff of the formula

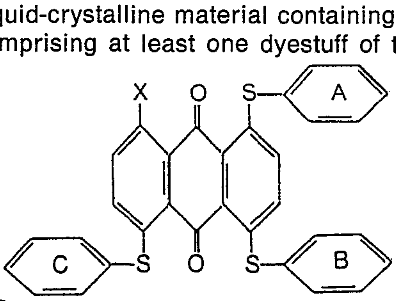

I

in which
X represents H or 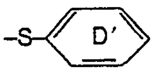,

it being possible for the rings A, B, C and D to carry 1, 2, 3, 4, or 5, preferably 1, 2 or 3, substituents from the series comprising alkyl which is optionally interrupted by –O–, –S– and/or –NR–, R denoting alkyl or aryl, cycloalkyl, aralkyl, alkoxy which is optionally interrupted by –O–, –S– or –NR–, R denoting alkyl or aryl, halogen, trifluoromethyl, nitro, optionally substituted amino, carboxylic acid derivative, sulphonic acid derivative or optionally substituted sulphonamide groups, at least one anthraquinone dyestuff, preferably a tetraamino anthraquinone dyestuff and an azo dyestuff, preferably a diazo dyestuff, which is derived from substituted benzidine.

6. Liquid-crystalline material according to Claims 1 to 5, containing about 0.01 to about 30% by weight, preferably about 0.5 to about 5% by weight, of anthraquinone dyestuff.

7. Dyestuff of the formula

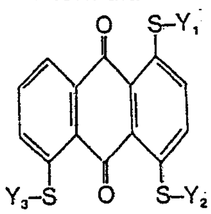

III

in which
$Y_1$, $Y_2$ and $Y_3$ denote phenyl or phenyl which is optionally substituted by $C_1$–$C_{12}$-alkyl which is optionally interrupted by –O–, –S– and/or –NR–, R denoting $C_1$–$C_8$-alkyl, $C_1$–$C_{12}$-alkoxy which is optionally interrupted by –O–, –S– and/or –NR–, R denoting $C_1$–$C_8$-alkyl, or by fluorine, chlorine, bromine, trifluoromethyl, $C_1$–$C_8$-alkyl carboxylates, phenyl carboxylates which are optionally substituted in the phenyl radical by $C_1$–$C_8$-alkyl, substituted phenyl sulphonates, or sulphonamide groups which are optionally monosubstituted or disubstituted by $C_1$–$C_8$-alkyl, $C_1$–$C_8$-alkoxy-$C_1$–$C_8$-alkyl, $C_1$–$C_8$-alkylthio-$C_1$–$C_8$-alkyl and phenyl, with the exception of the compounds in which $Y_1$, $Y_2$ and $Y_3$ at the same time denote phenyl, 2-methylphenyl, 4-methylphenyl, 4-t.-butylphenyl or pentachlorophenyl.

8. Dyestuff of the formula

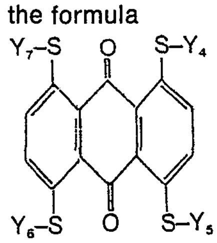

IV

in which
$Y_4$, $Y_5$, $Y_6$ and $Y_7$ have the meanings listed for $Y_1$, $Y_2$ and $Y_3$ in formula III, with the exception of the compounds in which $Y_4$, $Y_5$, $Y_6$ and $Y_7$ at the same time denote phenyl, 2-methylphenyl, 4-methylphenyl, 3-ethylphenyl, 3,4-dimethylphenyl, 4-t.-butylphenyl, 4-i-octylphenyl, 4-dodecylphenyl, 3-methoxyphenyl, 2-ethoxyphenyl, 4-n-butoxyphenyl, 2-chlorophenyl, 4-chlorophenyl, 4-fluorophenyl, 3-bromophenyl or pentachlorophenyl.

9. Dyestuff of the formula

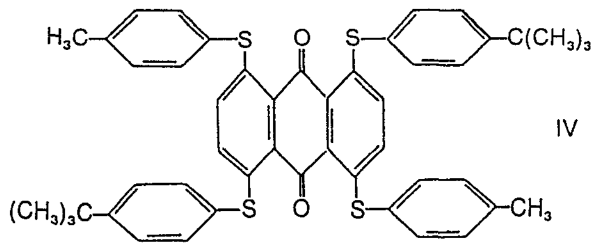

IV

**Revendications**

1. Matière à cristallinité liquide contenant au moins un colorant anthraquinonique de formule

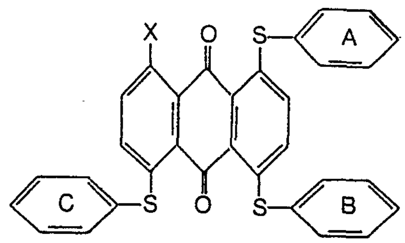

I

dans laquelle
X représente H ou 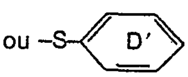

les noyaux A, B, C et D pouvant porter 1, 2, 3, 4 ou 5, de préférence 1, 2 ou 3 substituants de la série alkyle éventuellement interrompu par –O–, –S– et/ou –NR–, R désignant un groupe alkyle ou aryle, cycloalkyle, aralkyle, alkoxy éventuellement interrompu par –O–, –S– ou –NR–, R désignant un groupe alkyle ou aryle, halogéno, trifluorométhyle, nitro, amino éventuellement substitué, dérivé d'acide carboxylique, dérivé d'acide sulfonique ou groupes sulfamido éventuellement substitués, au cas où

X représente 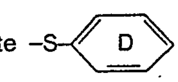

les quatre substituants en α du noyau d'anthraquinone sont identiques, à l'exception de la 1,4,5,8-tétra(phénylthio)anthraquinone et de la 1,4,5,8-tétra-(p-tertio-butylphénylthio)anthraquinone.

2. Matière à cristallinité liquide suivant la revendication 1, contenant au moins un colorant anthraquinonique de formule I, dans laquelle les noyaux A, B, C et/ou, les cas échéant, D ne sont pas substitués ou sont substitués par un substituant de la série alkyle en $C_1$ à $C_{18}$ éventuellement interrompu par –O–, –S– et/ou –NR–, R désignant un groupe alkyle en $C_1$ à $C_8$ ou un groupe phényle, cycloalkyle en $C_3$ à $C_7$, phényl(alkyle en $C_1$ à $C_8$),

naphtyl-(alkyle en $C_1$ à $C_8$), fluoro, chloro, bromo, trifluorométhyle, nitro, amino éventuellement mono-ou disubstitué par un radical alkyle en $C_1$ à $C_8$, (alkoxy en $C_1$ à $C_8$)-alkyle en $C_1$ à $C_8$, (alkylthio en $C_1$ à $C_8$)-alkyle en $C_1$ à $C_8$ et phényle, phénylamino, alkoxy en $C_1$ à $C_8$ éventuellement interrompu par –O–, –S– et/ou –NR–, R désignant un groupe alkyle en $C_1$ à $C_8$ ou phényle, des groupes ester d'alkyle en $C_1$ à $C_8$ d'acide carboxylique, esters de phényle d'acide carboxylique éventuellement substitués dans le reste phényle par un radical alkyle en $C_1$ à $C_8$, esters de phényle d'acide sulfonique éventuellement substitués dans le reste phényle par un radical alkyle en $C_1$, à $C_8$, des groupes sulfamido monosubstitués ou disubstitués, le cas échéant, par des substituants alkyle en $C_1$ à $C_8$, (alkoxy en $C_1$ à $C_8$)-alkyle en $C_1$ à $C_8$, (alkylthio en $C_1$ à $C_8$)-alkyle en $C_1$ à $C_8$ et phényle.

3. Matière à cristallinité liquide suivant la revendication 1, contenant au moins un colorant anthraquinonique de formule

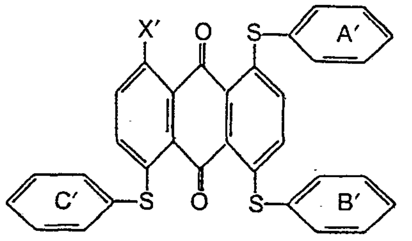
II

dans laquelle X′ représente H ou 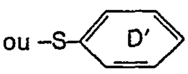

et les noyaux A′, B′, C′ et/ou D′ peuvent être substitués par un ou deux substituants choisis dans la série alkyle éventuellement interrompu par –O–, –S– et/ou –NR–, R désignant un groupe alkyle ou aryle, alkoxy éventuellement interrompu par –O–, –S– et/ou –NR–, R désignant un groupe alkyle ou aryle, halogéno, trifluorométhyle, groupes ester d'acide carboxylique, groupes ester d'acide sulfonique ou sulfamido.

4. Matière à cristallinité liquide suivant la revendication 3, contenant au moins un colorant anthraquinonique de formule II dans laquelle les noyaux A′, B′, C′ et, le cas échéant D′ peuvent être substitués par un substituant de la série alkyle en $C_1$ à $C_{12}$ éventuellement interrompu par –O–, –S– et/ou –NR–, R désignant un groupe alkyle en $C_1$ à $C_8$ ou phényle, alkoxy en $C_1$ à $C_{12}$ éventuellement interrompu par –O–, –S– ou –NR–, R désignant un groupe alkyle en $C_1$ à $C_8$ ou phényle, fluoro, chloro, bromo, trifluorométhyle, ester d'alkyle en $C_1$ à $C_8$ d'acide carboxylique, ester phénylique d'acide carboxylique éventuellement substitué dans le reste phényle par un radical alkyle en $C_1$ à $C_8$, ester phénylique d'acide sulfonique éventuellement substitué dans le reste phényle par un radical alkyle en $C_1$ à $C_8$, groupes sulfamido mono- ou disubstitués, le cas échéant, par des radicaux alkyle en $C_1$ à $C_8$, (alkoxy en $C_1$ à $C_8$)-alkyle en $C_1$ à $C_8$, (alkylthio en $C_1$ à $C_8$)-alkyle en $C_1$ à $C_8$ et phényle.

5. Matière à cristallinité liquide contenant un mélange d'au moins un colorant de formule

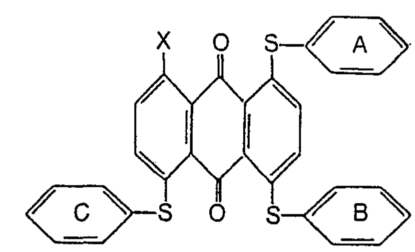
I

dans laquelle

X représente H ou 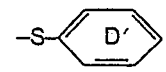

les noyaux A, B, C et D pouvant porter 1, 2, 3, 4 ou 5, de préférence 1, 2 ou 3 substituants de la série alkyle éventuellement interrompu par –O–, –S– et/ou –NR–, R désigne un groupe alkyle ou aryle, cycloalkyle, aralkyle, alkoxy éventuellement interrompu par –O–, –S– ou –NR–, R désignant un groupe alkyle ou aryle, halogéno, trifluorométhyle, nitro, amino éventuellement substitué, dérivé d'acide carboxylique, dérivé d'acide sulfonique ou groupes sulfamido éventuellement substitués, d'au moins un colorant anthraquinonique, de préférence un colorant tétra-amino-anthraquinonique, et d'un colorant azoïque, de préférence un colorant diazoïque qui est dérivé de benzidine substituée.

6. Matière à cristallinité liquide suivant les revendications 1 à 5, contenant environ 0,01 à environ 30% en poids, de préférence environ 0,5 à environ 5% en poids, de colorant anthraquinonique.

7. Colorant de formule

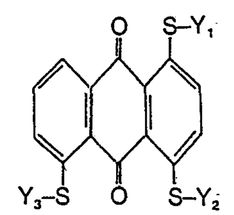
III

dans laquelle

$Y_1$, $Y_2$, $Y_3$ représentent un groupe phényle ou un groupe alkyle en $C_1$ à $C_{12}$ éventuellement interrompu par –O–, –S– et/ou –NR–, R désignant un groupe alkyle en $C_1$ à $C_8$, alkoxy en $C_1$ à $C_{12}$ éventuellement interrompu par –O–, –S– et/ou –NR–, R désignant un groupe alkyle en $C_1$ à $C_8$, fluoro, chloro, bromo, trifluorométhyle, ester d'alkyle en $C_1$ à $C_8$ d'acide carboxylique, ester phénylique d'acide carboxylique éventuellement substitué dans le reste phényle par un radical alkyle en $C_1$ à $C_8$, ester phénylique d'acide sulfonique substitué, ou phényle éventuellement substitué par des groupes sulfamido mono- ou disubstitués par des radicaux alkyle en $C_1$ à $C_8$, (alkoxy en $C_1$ à $C_8$)-alkyle en $C_1$ à $C_8$, (alkylthio en $C_1$ à $C_8$)-alkyle en $C_1$ à $C_8$ et phényle, à l'exception des composés dans lesquels $Y_1$, $Y_2$ et $Y_3$ représentent en même temps un groupe phényle, 2-méthylphényle, 4-méthylphényle, 4-tertio-butylphényle ou pentachlorophényle.

8. Colorant de formule

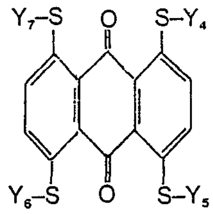

dans laquelle

$Y_4$, $Y_5$, $Y_6$, $Y_7$ ont les définitions indiquées pour $Y_1$, $Y_2$, $Y_3$ relativement à la formule III, à l'exception des composés dans lesquels $Y_4$, $Y_5$, $Y_6$ et $Y_7$ désignent en même temps un groupe phényle, 2-méthylphényle, 4-méthylphényle, 3-éthylphényle, 3,4-diméthylphényle, 4-tertio-butylphényle, 4-isooctylphényle, 4-dodécylphényle, 3-méthoxyphényle, 2-éthoxyphényle, 4-n-butoxyphényle, 2-chlorophényle, 4-chlorophényle, 4-fluorophényle, 3-bromophényle ou pentachlorophényle.

9. Colorant de formule

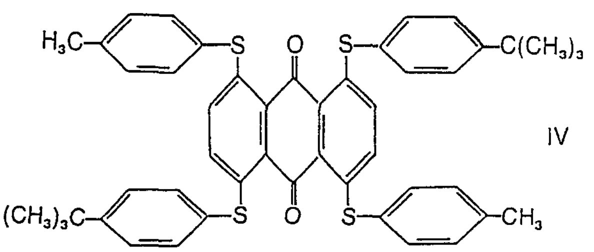

IV